# EUROPEAN PATENT SPECIFICATION

(11) **EP 3 450 092 B1**
(45) Date of publication and mention of the grant of the patent: **20.04.2022**
(21) Application number: 18188058.4
(22) Date of filing: 08.08.2018
(51) Int. Cl.: B23Q 11/08, E05F 15/605, E05F 15/67, E06B 9/06

(54) **COVERING APPARATUS FOR MACHINE TOOLS**
ABDECKVORRICHTUNG FÜR WERKZEUGMASCHINEN
DISPOSITIF DE PROTECTION POUR MACHINES-OUTILS

(30) Priority: 29.08.2017 IT 201700097201
(43) Date of publication of application: 06.03.2019
(73) Proprietor: P.E.I. Protezioni Elaborazioni Industriali S.r.l., 40012 Calderara di Reno (Bologna) (IT)
(72) Inventor: BENEDETTI, Michele, 40132 BOLOGNA (IT); SHIHADEH, Omar, 40013 CASTEL MAGGIORE (BOLOGNA) (IT)
(74) Representative: Milli, Simone

(56) References cited:
- WO-A1-2017/109165
- DE-B3-102014 202 471
- FR-A1- 2 968 345
- US-A1- 2006 144 529

## Description

This invention relates to a covering apparatus for machine tools.

More specifically, this invention is applicable to the covering of a work area of large size machine tools, such as, for example, milling machines, having a mobile head for moving the machine tool.

The closing of the work area is carried out for limiting the escape and the diffusion of toxic or hazardous fumes deriving from the processing of materials such as carbon fibres or composite materials in general or from the use of lubricating-cooling liquids.

Laterally, the work area of the machine tool is enclosed through the use of rigid panels which are connected to a frame of the machine tool.

The work area is enclosed at the top thanks to suitable closing apparatuses which are connected to the movement of a movable crosspiece forming part of the closing apparatuses.

The need is known of moving the movable crosspiece of the closing apparatuses for maintenance purposes and/or for loading parts with a gantry crane from above for positioning the parts to be machined by the machine tool.

There are prior art solutions wherein the beam is moved manually by expert operators.

Disadvantageously, these solutions require lengthy times for repositioning the crosspiece in order to perform any necessary repairs or in order to allow the extraction or the placing of the part by the gantry crane. Moreover, it is possible that the operators, even though trained, can injure themselves following unexpected events during repositioning of the crosspiece.

Solutions are known wherein the movable crosspiece has 380 V alternating current motors which, in combination with a suitable PLC interface, automate the movement of the crosspiece.

Disadvantageously, these motors require electrical connections for powering them which comprise the presence of cables that must be moved and kept under control so that not to encroach on or get caught in the components of the covering apparatus following movement of the crosspiece.

Moreover, the motor, in combination with a reduction gear unit, is very heavy and would therefore require an inverter which, together with the above-mentioned electrical connections, would render the system excessively complex also in terms of maintenance.

FR 2 968 345 A1 discloses a covering apparatus comprising:
- at least one pair of guides parallel to each other and connectable to a frame of a machine tool;
- at least one covering body with a variable configuration associated with the guides and a movable crosspiece, wherein the covering body has, respectively, a first end side attachable to the frame and a second end side fixable to the movable crosspiece, the crosspiece comprising movement means for allowing a sliding of the crosspiece along a direction of movement parallel to the guides, the covering body comprising a plurality of covering elements; wherein the crosspiece comprises a direct current motor associated with the movement means to allow the sliding of the crosspiece on the pair of guides, wherein each guide of the pair of guides comprises a relative rack and wherein the movement means are made in the form of pinions integral with the crosspiece and meshed in the racks, wherein the direct current motor is associated with a first gear wheel designed to transmit a rotational motion to the pinions through one of the racks and a synchronisation shaft carrying both pinions.

The technical purpose of this invention is therefore to provide a covering apparatus for machine tools which allows some of the drawbacks of the prior art to be overcome.

The aim of this invention is therefore to provide a covering apparatus for machine tools which is structurally simpler than those present in the prior art and which allows a rapid access to the work area.

Another aim of this invention is also to provide a covering apparatus for machine tools which is smaller than those present in the prior art in such a way as not to risk malfunctions during use due to interference between different components.

Another aim of this invention is also to provide a covering apparatus for machine tools which can advantageously be powered directly by the electrical equipment already existing in machine tools.

The technical purpose indicated and the aims specified are substantially achieved by a covering apparatus as defined in claim 1.

The description is set out below with reference to the accompanying drawings which are provided solely for purposes of illustration without restricting the scope of the invention and in which:
Figure 1 is a perspective representation of the covering apparatus according to this invention;
Figure 2 is a detail of the covering apparatus according to a first embodiment;
Figure 3 is a further detail of the covering apparatus according to the same embodiment of Figure 2;
Figure 4 is a detail of the covering apparatus according to a second embodiment;

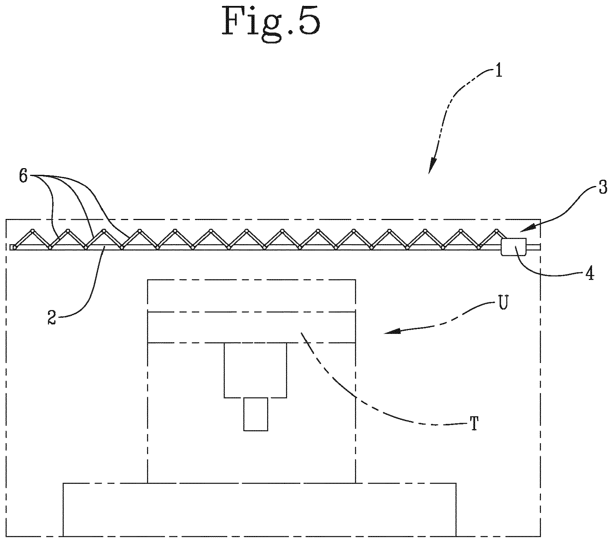

Figure 5 is a schematic representation of a machine tool comprising a machining crosspiece according to this invention.

With reference to the accompanying drawings, the numeral 1 denotes in its entirety a covering apparatus for machine tools according to this invention which, for convenience of description, will be referred to hereafter as apparatus 1. The elements of the embodiments in common in the accompanying drawings are denoted with the same reference numeral.

The covering apparatus 1 can be associated with a U-type machine tool such as, for example, a milling machine or other similar type of machine.

More specifically, the covering apparatus of the 1 may be mounted on an upper portion of the U-shaped machine tool in such a way as to separate the work area from the upper area of the building or the machine itself. Work area means the space inside which the machining of the parts is carried out and where, following these machining operations, toxic fumes or fumes resulting from the machining which are potentially hazardous are produced.

Preferably, the machine tool comprising a machining crosspiece "T" associated with a tool and movable inside the work area closed at the top by an apparatus 1 positioned at the top of the machining crosspiece "T". Alternatively, the machining crosspiece "T" is associated on both sides to an apparatus 1.

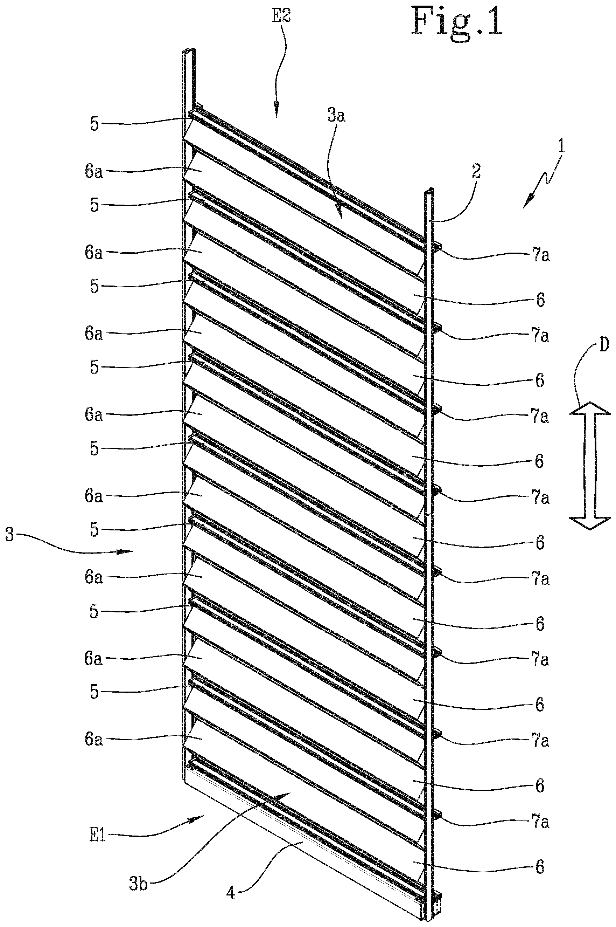

The covering apparatus 1 is represented in Figure 1 in a relative general form.

The covering apparatus 1 comprises at least one pair of guides 2, as shown in the general example Figure 1, parallel to each other and connectable to a frame of a machine tool at an opening of the frame. More specifically, the pair of guides 2 may be mounted at an opening of the frame located above a compartment to be covered (located above the entire machine to separate it from the upper area of the building or located close to an upper zone of the machine).

The covering apparatus of Figure 1 comprises at least one covering element 3 associated with the pair of guides 2 and a movable crosspiece 4. The covering body 3 has a variable configuration and comprises, respectively, a first end side 3a fixable to the frame of the machine and at least a second end side 3b fixed to the crosspiece 4.

The covering body 3 comprises a plurality of beams 5 slidable parallel to each other along a direction of movement "D" parallel to the pair of guides 2. The covering body 3 also comprises a plurality of covering elements 6, each fixed to two adjacent beams 5.

Preferably, the covering elements 6 are made in the form of bellows 6a, as illustrated in the accompanying drawings.

The crosspiece 4 comprises movement means configured for allowing the sliding of the crosspiece 4 along the sliding direction "D" in such a way as to determine a configuration of extension or a configuration of shortening of the covering body 3.

The extension configuration means a configuration wherein the movable crosspiece is at an end "E1" of the guides in such a way that the covering apparatus 1 completely covers the compartment which separates the work area from the upper area. In this configuration, the covering elements 6 in the form of bellow 6a are completely open and the beams 5 are spaced from each other in such a way as to allow the complete opening of the covering elements 6.

The shortening configuration means a configuration wherein the movable crosspiece is at an end "E2" of the guides, opposite to the end "E1", wherein the end side 3a is fixed to the frame of the machine, in such a way that the covering apparatus 1 leaves free the compartment which separates the work area from the upper zone of it, to allow maintenance works or the entry or exit of elements by gantry crane. In this configuration, the covering elements 6 in the forms of bellows 6a are enclosed and the beams 5 are substantially adjacent to each other.

Preferably, the beams 5 are made with a modular structure made of aluminium.

The covering elements 6 made in the form of bellows 6a have preferably a cover made of translucent fabric.

Preferably, both the crosspiece 4 and the beams 5 slide on the guides with the aid of bearings 7a. The bearings 7a are positioned in such a way as to facilitate the sliding of the crosspiece 4 and the beams 5 along the sliding direction "D". Preferably, in a assembly configuration of the apparatus 1 on the machine tool, the bearings 7a are positioned above the guides 2 on which they slide.

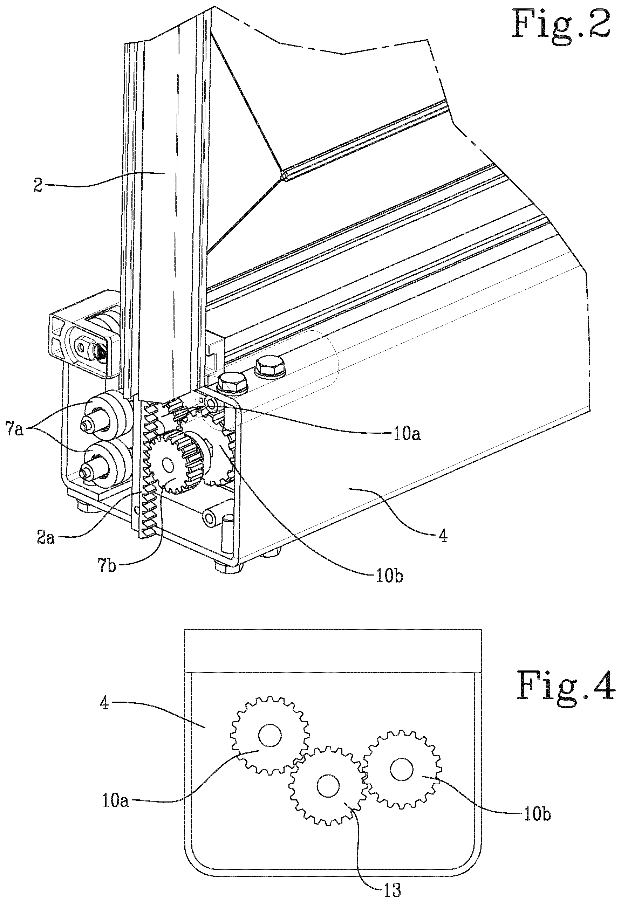

Each guide of the pair of guides 2 comprises a relative rack 2a (shown in Figure 2) positioned below the guide. The racks 2a are aligned to the guides and are, therefore, also parallel to each other.

The movement means are made in the form of pinions 7b integral with the crosspiece 4 and meshed in the racks 2a.

According to the invention, the crosspiece 4 comprises a direct current motor 8 associated with the movement means for allowing the sliding of the crosspiece 4 on the pair of guides 2.

The direct current motor 8 is powered and controlled through a PLC controller (of the machine) equipped with all the functions necessary to allow control of the covering apparatus 1 with automated commands.

Preferably, the direct current motor 8 is a low voltage motor. Low voltage means a motor having a voltage preferably less than 50 V, even more preferably less than 24 V.

Preferably, as shown in the accompanying drawings, the direct current motor 8 is internally located inside the crosspiece 4. In this way, the direct current motor 8 advantageously allows the overall size to be reduced relative to the motors used in the prior art. This solution is not limited, since the direct current motor 8 has smaller dimensions compared with those of the motors used in the prior art and may therefore be located differently to the internal solution described above.

Preferably, the crosspiece 4 comprises internally packs of rechargeable batteries (not illustrated) designed to power the PLC controller. The batteries are rechargeable by suitable recharging means which can be engaged following the sliding of the crosspiece 4 along the sliding direction "D" and the positioning of the crosspiece 4 in a predetermined position for recharging batteries.

More in detail, it is possible, preferably, that when the crosspiece 4 is positioned in positions which lead to the configuration of extension or shortening, it is in contact with electrical contacts which recharge the above-mentioned batteries. This solution advantageously leads to the reduction of cables or bulky electrical connections as well as the possibility of recharging the batteries without having to change them manually with others, resulting in even lengthy standby times.

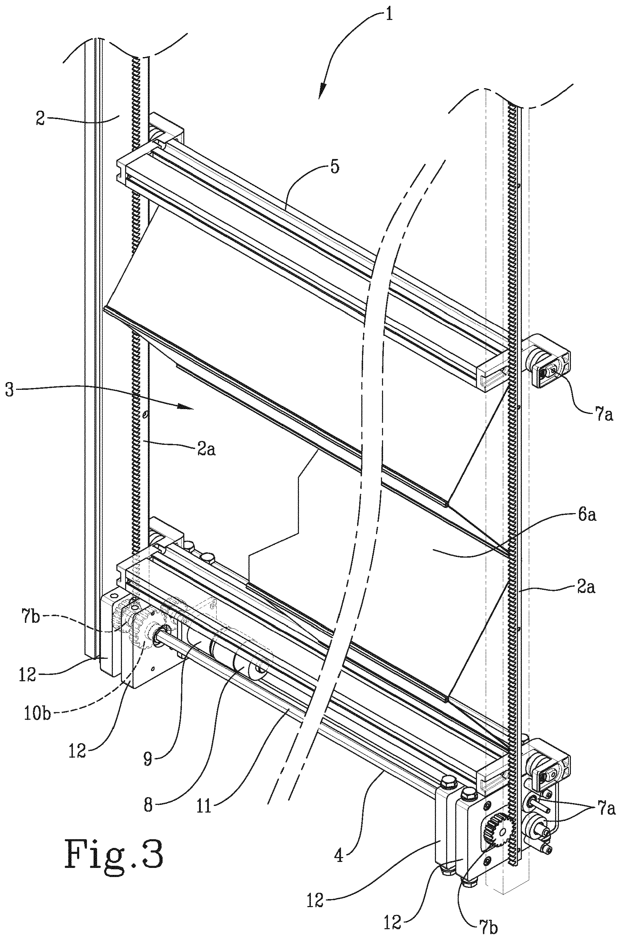

Preferably, the direct current motor 8 comprises a relative reduction gear unit 9 (shown in Figure 3 and incorporated in the motor itself) having smaller dimensions than the reduction gear used in the prior art for the alternating current motors.

As illustrated in Figure 2, even though this feature is present in all the embodiments of this invention, the direct current motor 8 is associated with a first gear wheel 10a designed to transmit a rotational motion to a second gear wheel 10b associated with a drive shaft 11 inside the crosspiece 4. Preferably, as illustrated in the accompanying drawings, the drive shaft 11 coincides with the axis of rotation of the pinions 7b.

The drive shaft 11 is configured for rotating the pinions 7b and therefore allowing the sliding of the crosspiece 4 along the sliding direction "D". This solution advantageously leads to preventing the crosspiece 4 from jamming if moved from only one side, due to its great width.

In effect, in this way, the crosspiece 4 is moved by two sides, through the movement transmitted by the low voltage motor 8.

Preferably, the covering apparatus 1 comprises a braking device (not illustrated) acting on the movement means when the direct current motor 8 does not move the crosspiece 4.

Preferably, the braking device is active on the drive shaft 11.

Preferably, the braking device is an electro-mechanical brake which is activated by the PLC controller when the direct current motor 8 does not move the crosspiece 4.

In other words, the braking device is switched off when the direct current motor 8 moves the crosspiece 4.

In other words, when the functions of the PLC controller result in it not activating the direct current motor 8 to move the crosspiece 4, the PLC controller is programmed for advantageously braking unwanted movements of the crosspiece 4 by means of the braking device.

In the embodiment of Figures 2 and 3, the first gear wheel 10a and the second gear wheel 10b are interposed between two plates 12.

In this way, the gearing consisting of the first gear wheel 10a and the second gear wheel 10b is separated from the direct current motor 8 and from the pinion 7b associated with the side of the crosspiece 4 where the motor 8 is present.

In the embodiment of Figure 4, the crosspiece 4, on the side on which is present the direct current motor 8, comprises an idle wheel 13 interposed and meshed between the first gear wheel 10a and the second gear wheel 10b. As is known, the idle wheel 13 does not affect the transmission ratio of the two shafts but makes it possible to reverse the direction of rotation from the first gear wheel 10a to the second gear wheel 10b.

The covering apparatus 1 as described above in its embodiments is therefore able to overcome the drawbacks of the prior art. Advantageously, the direct current motor 8 has features such as to be lightweight and compact.

Still more advantageously, the direct current motor 8 is not bulky in light of its dimensions.

Further, if there is powering directly from the PLC of the machine, there is, advantageously, not even the need for further power supply electrical cables (supplied directly by the PLC controller) which can obstruct the correct sliding of the crosspiece 4 of the covering apparatus 1.

## Claims

1. A covering apparatus (1) for machine tools equipped with a PLC controller, comprising:
at least one pair of guides (2) parallel to each other and connectable to a frame of a machine tool at an opening in the frame located above a compartment to be covered;
at least one covering body (3) with a variable configuration associated with the guides (2) and a movable crosspiece (4), wherein the covering body (3) has, respectively, a first end side (3a) attachable to the frame and a second end side (3b) fixable to the movable crosspiece (4), the crosspiece (4) comprising movement means for allowing a sliding of the crosspiece (4) along a direction of movement (D) parallel to the guides (2) in such a way as to determine a configuration of extension or a configuration of retraction of the covering body (3), the covering body (3) comprising a plurality of beams (5) slidable parallel to each other along the direction of movement (D) on the guides (2) and a plurality of covering elements (6) made in the form of bellows (6a), each fixed to two adjacent beams (5);
wherein the crosspiece (4) comprises a direct current motor (8), which is designed to be in use powered and controlled by the PLC controller, associated with the movement means to allow the sliding of the crosspiece (4) on the pair of guides (2), wherein each guide of the pair of guides (2) comprises a relative rack (2a) and wherein the movement means are made in the form of pinions (7b) integral with the crosspiece (4) and meshed in the racks (2a), wherein the direct current motor (8) is associated with a first gear wheel (10a) designed to transmit a rotational motion to a second gear wheel (10b) associated with a drive shaft (11) inside the crosspiece (4) and configured for rotating the pinions (7b), thus moving the crosspiece (4) by two sides.

2. The covering apparatus (1) according to claim 1, wherein the direct current motor (8) is a low voltage motor, the low voltage motor having a voltage preferably less than 50 V, even more preferably less than 24 V.

3. The covering apparatus (1) according to claim 1 or 2, wherein the direct current motor (8) is internally located inside the crosspiece (4).

4. The covering apparatus (1) according to any one of the preceding claims, wherein the crosspiece (4) comprises internally packs of rechargeable batteries designed to power the PLC controller, the batteries being rechargeable by suitable recharging means which can be engaged following the sliding of the crosspiece (4) and the arrangement of the crosspiece (4) in a predetermined recharging position.

5. The covering apparatus (1) according to any one of the preceding claims, wherein the direct current motor (8) comprises a relative reduction gear unit (9).

6. The covering apparatus (1) according to any one of the preceding claims, wherein the first gear wheel (10a) and the second gear wheel (10b) are interposed between two plates (12).

7. The covering apparatus (1) according to any one of the preceding claims from 1 to 5, wherein the crosspiece (4) comprises an idle wheel (13) interposed and meshed between the first gear wheel (10a) and the second gear wheel (10b).

8. The covering apparatus (1) according to any one of the preceding claims, comprising a braking device acting on the movement means, preferably the braking device being an electro-mechanical brake designed to be in use activated
by the PLC controller when the direct current motor (8) does not move the crosspiece (4).

9. A machine tool (U) comprising a machining crosspiece (T) associated with a tool and movable inside a working area wherein the working area is closed at the top by a covering apparatus (1) according to any one of the preceding claims located at the top of the machining crosspiece.

## Patentansprüche

1. Abdeckvorrichtung (1) für Werkzeugmaschinen, ausgestattet mit einer SPS-Steuerung, umfassend:
mindestens ein Paar Führungen (2), die parallel zueinander angeordnet sind und mit einem Rahmen einer Werkzeugmaschine an einer Öffnung im Rahmen, die sich über einer abzudeckenden Unterteilung befindet, verbunden werden können;
mindestens einen Abdeckkörper (3) mit einer variablen Auslegung, assoziiert mit den Führungen (2) und einem bewegbaren Querstück (4), wobei der Abdeckkörper (3) jeweils eine erste Endseite (3a), die am Rahmen angebracht werden kann, und eine zweite Endseite (3b) aufweist, die am bewegbaren Querstück (4) fixiert werden kann, wobei das Querstück (4) Bewegungsmittel umfasst, um ein Verschieben des Querstücks (4) entlang einer Bewegungsrichtung zu erlauben, die parallel zu den Führungen (2) verläuft, sodass eine Ausfahrauslegung oder eine Einfahrauslegung des Abdeckkörpers (3) herbeigeführt wird, wobei der Abdeckkörper (3) eine Vielzahl von Trägern (5), die parallel zueinander entlang der Bewegungsrichtung (D) auf den Führungen (2) verschoben werden können, und eine Vielzahl von Abdeckelementen (6) umfasst, die in Form von Bälgen (6a) ausgebildet sind, die jeweils an zwei angrenzenden Trägern (5) fixiert sind;
wobei das Querstück (4) einen Gleichstrommotor (8) umfasst, der ausgestaltet ist, um in Verwendung von der SPS-Steuerung angetrieben und gesteuert zu werden, assoziiert mit den Bewegungsmitteln, um das Verschieben des Querstücks (4) auf dem Paar Führungen (2) zu erlauben, wobei eine jede Führung des Paars Führungen (2) eine jeweilige Zahnstange (2a) umfasst und wobei die Bewegungsmittel in Form von Ritzeln (7b) ausgebildet sind, die fest mit dem Querstück (4) verbunden sind und mit den Zahnstangen (2a) im Eingriff stehen, wobei der Gleichstrommotor (8) mit einem ersten Zahnrad (10a) verbunden ist, das ausgestaltet ist, um eine rotatorische Bewegung auf ein zweites Zahnrad (10b) zu übertragen, assoziiert mit einer Antriebswelle (11) innerhalb des Querstücks (4) und ausgelegt, um die Ritzel (7b) zu drehen, sodass das Querstück (4) von zwei Seiten bewegt wird.

2. Abdeckvorrichtung (1) nach Anspruch 1, wobei der Gleichstrommotor (8) ein Niederspannungsmotor ist, wobei der Niederspannungsmotor eine Spannung aufweist, die vorzugsweise weniger als 50 V, noch besser weniger als 24 V beträgt.

3. Abdeckvorrichtung (1) nach Anspruch 1 oder 2, wobei der Gleichstrommotor (8) innenseitig im Querstück (4) befindlich ist.

4. Abdeckvorrichtung (1) nach einem der vorhergehenden Ansprüche, wobei das Querstück (4) innenseitig Packungen aufladbarer Batterien umfasst, die ausgestaltet sind, um die SPS-Steuerung zu versorgen, wobei die Batterien mittels geeigneter Auflademittel aufladbar sind, die nach dem Verschieben des Querstücks (4) und der Anordnung des Querstücks (4) in einer vorgegebenen Aufladeposition in Eingriff gebracht werden können.

5. Abdeckvorrichtung (1) nach einem der vorhergehenden Ansprüche, wobei der Gleichstrommotor (8) eine jeweilige Untersetzungsgetriebeeinheit (9) umfasst.

6. Abdeckvorrichtung (1) nach einem der vorhergehenden Ansprüche, wobei das erste Zahnrad (10a) und das zweite Zahnrad (10b) zwischen zwei Platten (12) eingesetzt sind.

7. Abdeckvorrichtung (1) nach einem der Ansprüche 1 bis 5, wobei das Querstück (4) ein frei laufendes Rad (13) umfasst, das zwischen dem ersten Zahnrad (10a) und dem zweiten Zahnrad (10b) eingesetzt ist und im Eingriff steht.

8. Abdeckvorrichtung (1) nach einem der vorhergehenden Ansprüche, umfassend eine Bremsvorrichtung, die auf die Bewegungsmittel wirkt, wobei es sich bei der Bremsvorrichtung vorzugsweise um eine elektromechanische Bremse handelt, die ausgestaltet ist, um in Verwendung durch die SPS-Steuerung aktiviert zu werden, wenn der Gleichstrommotor (8) das Querstück (4) nicht bewegt.

9. Werkzeugmaschine (U), umfassend ein Bearbeitungsquerstück (T), das mit einem Werkzeug assoziiert ist und innerhalb eines Arbeitsbereichs bewegbar ist, wobei der Arbeitsbereich an der Oberseite durch eine Abdeckvorrichtung (1) nach einem der vorhergehenden Ansprüche verschlossen ist, die sich an der Oberseite des Bearbeitungsquerstücks befindet.

## Revendications

1. Dispositif de couverture (1) pour machines-outils équipées d'un contrôleur PLC, comprenant :
au moins une paire de guides (2) parallèles l'un à l'autre et pouvant être reliés à un châssis d'une machine-outil au niveau d'une ouverture dans le châssis située au-dessus d'un compartiment à couvrir ;
au moins un corps de couverture (3) à configuration variable associé aux guides (2) et une traverse mobile (4), dans lequel le corps de couverture (3) a, respectivement, un premier côté d'extrémité (3a) pouvant être attaché au cadre et un second côté d'extrémité (3b) pouvant être fixé à la traverse mobile (4), la traverse (4) comprenant des moyens de déplacement pour permettre un coulissement de la traverse (4) le long d'une direction de déplacement (D) parallèle aux guides (2) de manière à déterminer une configuration d'extension ou une configuration de rétraction du corps de couverture (3), le corps de couverture (3) comprenant une pluralité de poutres (5) pouvant coulisser parallèlement les unes aux autres le long de la direction de déplacement (D) sur les guides (2) et une pluralité d'éléments de couverture (6) réalisés sous la forme de soufflets (6a), chacun fixé à deux poutres adjacentes (5) ;
dans lequel la traverse (4) comprend un moteur à courant continu (8), qui est conçu pour être alimenté et contrôlé en service par le contrôleur PLC, associé aux moyens de déplacement pour permettre le glissement de la traverse (4) sur la paire de guides (2), dans lequel chaque guide de la paire de guides (2) comprend une crémaillère relative (2a) et dans lequel les moyens de déplacement sont réalisés sous la forme de pignons (7b) solidaires de la traverse (4) et engrenés dans les crémaillères (2a), dans lequel le moteur à courant continu (8) est associé à une première roue dentée (10a) conçue pour transmettre un mouvement de rotation à une seconde roue dentée (10b) associée à un arbre d'entraînement (11) à l'intérieur de la traverse (4) et configurée pour faire tourner les pignons (7b), déplaçant ainsi la traverse (4) de deux côtés.

2. Dispositif de couverture (1) selon la revendication 1, dans lequel le moteur à courant continu (8) est un moteur basse tension, le moteur à basse tension ayant une tension de préférence inférieure à 50 V, encore plus préférablement inférieure à 24 V.

3. Dispositif de couverture (1) selon la revendication 1 ou 2, dans lequel le moteur à courant continu (8) est situé intérieurement à l'intérieur de la traverse (4).

4. Dispositif de couverture (1) selon l'une quelconque des revendications précédentes, dans lequel la traverse (4) comprend intérieurement des blocs de batteries rechargeables destinées à alimenter le contrôleur PLC, les batteries étant rechargeables par des moyens de recharge appropriés qui peuvent être engagés suite au coulissement de la traverse (4) et à la disposition de la traverse (4) dans une position de recharge prédéterminée.

5. Dispositif de couverture (1) selon l'une quelconque des revendications précédentes, dans lequel le moteur à courant continu (8) comprend un réducteur relatif (9).

6. Dispositif de couverture (1) selon l'une quelconque des revendications précédentes, dans lequel la première roue dentée (10a) et la deuxième roue dentée (10b) sont interposées entre deux plaques (12).

7. Dispositif de couverture (1) selon l'une quelconque des revendications précédentes de 1 à 5, dans lequel la traverse (4) comprend une roue folle (13) interposée et engrenée entre la première roue dentée (10a) et la deuxième roue dentée (10b).

8. Dispositif de couverture (1) selon l'une quelconque des revendications précédentes, comprenant un dispositif de freinage agissant sur les moyens de déplacement, de préférence le dispositif de freinage étant un frein électromécanique Z 11 conçu pour être en service activé par le contrôleur PLC lorsque le moteur à courant continu (8) ne déplace pas la traverse (4).

9. Machine-outil (U) comprenant une traverse d'usinage (T) associée à un outil et mobile à l'intérieur d'une zone de travail dans laquelle la zone de travail est fermée en haut par un dispositif de couverture (1) selon l'une quelconque des revendications précédentes situé au sommet de la traverse d'usinage.
